(19) Europäisches Patentamt
European Patent Office
Office européen des brevets

(11) **EP 4 711 711 A1**

(12) **EUROPEAN PATENT APPLICATION**
published in accordance with Art. 153(4) EPC

(43) Date of publication:
**18.03.2026 Bulletin 2026/12**

(51) International Patent Classification (IPC):
**G01C 19/64** (2006.01)

(21) Application number: **23937188.3**

(22) Date of filing: **13.09.2023**

(86) International application number:
**PCT/CN2023/118488**

(87) International publication number:
**WO 2024/234512 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.05.2023 CN 202310547328**

(71) Applicant: **SILITH TECHNOLOGY PTE. LTD.**
**Singapore 637145 (SG)**

(72) Inventor: **ZHANG, Xingyu**
**Shanghai 201210 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(54) **INTEGRATED INTERFEROMETRIC OPTICAL GYROSCOPE, ASSEMBLY, SYSTEM, AND METHOD FOR CALCULATING ROTATION SPEED INFORMATION**

(57) Provided are an integrated interferometric optical gyroscope, assembly, system, and a method for calculating rotation speed information. The gyroscope includes a light source module, a first coupling module, a second coupling module, at least two polarization splitting rotation modules, a photoelectric detection module and a helical waveguide module, wherein the two polarization splitting rotation modules are coupled to a telecentric end and a pericentric end of the helical waveguide module respectively, and are configured for converting the two beams of light waves in a same TE polarization state into a TE polarization state and a TM polarization state, sending the light waves to the two ends of the helical waveguide module to enable the light waves to be transmitted in opposite directions in the helical waveguide module respectively, then receiving the two beams of light passing through the helical waveguide module and converting the polarization states of the two paths of light back to the same TE polarization state. Due to the gyroscope having a circulator or a 50/50 coupler omitted, light waves are prevented from being reflected to the light source, and the influence of system errors, drifting or disturbance, environment temperature changes and the like on the performance stability of the gyroscope can be eliminated.

FIG. 2

**Description**

TECHNICAL FIELD

The present invention relates to the field of optical gyroscopes, in particular to an integrated interferometric optical gyroscope, assembly, system, and a method for calculating rotation speed information.

BACKGROUND ART

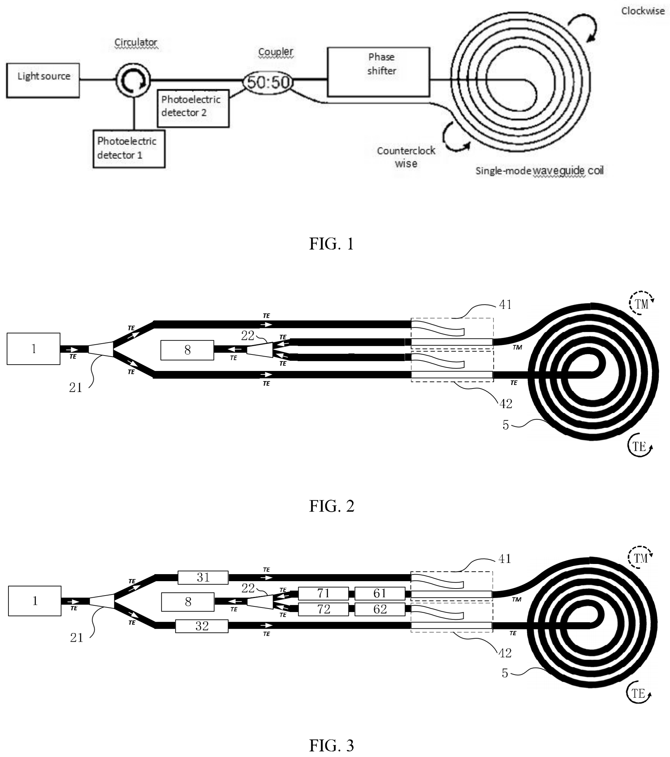

The configuration of a conventional interferometric optical gyroscope is shown in FIG. 1. Light emitted by a light source is split by a 50/50 coupler, enters a single-mode waveguide coil to form clockwise and counterclockwise light propagations. As the gyroscope rotates perpendicularly to a plane, two paths of light propagating in opposite directions result in different phase shifts which are proportional to a rotation speed. The phase shift is converted to intensity information when returned light is further interfered by the 50/50 coupler. The light is detected by a photoelectric detector after passing through a circulator. The circulator, as a discrete optical device, is usually made by a magneto-optical medium material, and is difficult to be applied to a monolithic integrated chip solution. In addition, the circulator also has a certain loss of about 1-2 dB, and the cost is also increased. Without the circulator, there will be light reflected to the light source, which is generally undesirable. The 50/50 coupler is also often used in place of the circulator to extract returned light to the detector. However, this 50/50 coupler causes additional link losses, such as 2*3 dB = 6 dB losses from passing back and forth twice through the 50/50 coupler, and part of the reflected light will pass through the 50/50 coupler to return the light source and affect the light source.

The additional loss and reflection and other problems of the circulator or the 50/50 coupler affect performance of the interferometric optical gyroscope. In addition, system errors, drifting or disturbance, environment temperature changes and the like also affect performance stability of the gyroscope, which also needs to be further improved. Therefore, the solution for the integrated gyroscope with no use of a circulator or a 50/50 coupler will avoid light waves reflected to a light source, and it has great significance in eliminating the influence of system errors, drifting or disturbance, environment temperature changes and the like on performance stability of the gyroscope. Therefore, there is an urgent need for a novel integrated interferometric optical gyroscope, assembly, system, and a method for calculating rotation speed information to improve the above problems.

SUMMARY OF THE INVENTION

The present invention aims to provide an integrated interferometric optical gyroscope, assembly, system, and a method for calculating rotation speed information. The integrated interferometric gyroscope has a low link optical loss, and it avoids emitting light to a light source, improves various performances of the interferometric optical gyroscope and simplifies manufacturing and reduces cost. In addition, the integrated interferometric gyroscope system can eliminate the influence of system errors, drifting or disturbance, environment temperature changes and the like on the performance stability of the gyroscope.

In a first aspect, the present invention provides an integrated interferometric optical gyroscope including a light source module, a first coupling module, a second coupling module, two polarization splitting rotation modules, a photoelectric detection module and a helical waveguide module, wherein the first coupling module is configured for splitting one beam of light waves emitted by the light source module into two beams of light waves; the two polarization splitting rotation modules are coupled to a telecentric end and a pericentric end of the helical waveguide module respectively, and configured for converting the two beams of light waves in a same TE polarization state into a transverse electric (TE) polarization state and a transverse magnetic (TM) polarization state, sending the light waves to two ends of the helical waveguide module 5 to enable the light waves to be transmitted in opposite directions in the helical waveguide module 5 respectively, then receiving the two beams of light passing through the helical waveguide module 5 and converting the polarization states of the two beams of light back to the same TE polarization state; the second coupling module is configured for combining the two beams of light waves outputted from the telecentric end and the pericentric end into one beam of synthesized light waves; and the photoelectric detection module is coupled to the second coupling module and is configured for acquiring rotation speed information of the gyroscope according to the synthesized light waves.

The method provided by the present invention has the beneficial effects that the two polarization splitting rotation modules in the integrated interferometric optical gyroscope are respectively coupled to the telecentric end and the pericentric end of the helical waveguide module, and the two beams of light waves are respectively transmitted by means of the helical waveguide module in the TE polarization state and in the TM polarization state. The second coupling module provided by the present invention is configured for combining two beams of light waves outputted from the telecentric end and the pericentric end into one beam of synthesized light waves, and the photoelectric detection module is coupled to the second coupling module. No circulator is required, no reflected light is generated towards the light source, a loss of the light waves can be avoided, and the performance of the integrated interferometric optical gyroscope can be improved. The above two beams of light waves in the TE polarization state and in the TM polarization state have a fixed phase difference in a static state of the gyroscope, and the fixed phase difference can be reasonably designed to enable the integrated interferometric optical gyroscope to work at an optimal working point, so as to acquire the rotation speed information more effectively.

Optionally, the polarization splitting rotation module is configured for converting two beams of light waves in a TE polarization state into one beam of light waves in a TE polarization state superposed with a TM polarization state; or the polarization splitting rotation module is configured for converting one beam of light waves in a TE polarization state superposed with a TM polarization state into two beams of light waves in a TE polarization state; and the helical waveguide module simultaneously supports transmission of polarization light therein in both TE polarization state and TM polarization state; and in the same helical waveguide module, light waves in the TE polarization state and light waves in the TM polarization state are transmitted in opposite directions.

Optionally, the gyroscope further includes a polarization control module, wherein the polarization control module is coupled to at least one polarization splitting rotation module, and is configured for adjusting or controlling a polarization mode of light waves, for example, filtering out undesired TM polarization light and retaining desired TE polarization light.

Optionally, the gyroscope further includes a variable optical attenuation module, wherein the variable optical attenuation module is coupled to the second coupling module, and is configured for adjusting intensity of light waves on two interferometric arms so as to improve interference effects.

Optionally, the gyroscope further includes a phase modulation module, wherein the phase modulation module is respectively coupled to the first coupling module and at least one polarization splitting rotation module, and is configured for modulating a phase of light waves and further adjusting the interferometric optical gyroscope at a working point.

Optionally, the gyroscope further includes a delay line, wherein the delay line is respectively coupled to the light source module and the first coupling module and is configured for delaying light waves.

Optionally, both the first coupling module and the second couple module are coupled to a light source module and a photoelectric detection module.

In a second aspect, the present invention provides an optical gyroscope assembly, including two gyroscopes, wherein propagation directions of polarization light in the TE polarization state in the two gyroscopes are opposite to each other, and propagation directions of polarization light in the TM polarization state in the two gyroscopes are opposite to each other.

Optionally, light source modules and photoelectric detection modules in the two gyroscopes are coupled in opposite positions.

Optionally, polarization splitting rotation modules in the two gyroscopes have ports facing different directions.

Optionally, the two gyroscopes share the same light source module; and one beam of light waves emitted by the light source module is split into four beams of light waves by means of coupling modules.

In a third aspect, the present invention provides a method for calculating rotation speed information of a gyroscope, which is configured for acquiring rotation speed information by means of the gyroscope of any one in the first aspect, including steps of: splitting one beam of light waves into two beams of light waves in a TE polarization state; converting the two beams of light waves in the TE polarization state into one beam of light waves in the TE polarization state and one beam of light waves in a TM polarization state; transmitting the beam of light waves in the TE polarization state and the beam of light waves in the TM polarization state by means of a helical waveguide module; converting the beam of light waves in the TE polarization state and the beam of light waves in the TM polarization state into two beams of light waves in the TE polarization state and then combining the two beams into one beam of synthesized light waves; and calculating light intensity information detected by a photoelectric detection module and then converting the light intensity information into total phase information so as to acquire rotation speed information.

As the polarization light in the TE polarization state and the polarization light in the TM polarization state have different effective refractive indexes, a fixed phase difference, represented by $\varphi_0$, is generated after the two paths of polarization light pass through the helical waveguide module. When the gyroscope rotates perpendicularly to a plane, the two paths of light propagating in opposite directions result in different phase shifts, represented by $\varphi r$, which are proportional to a rotation speed. The phase shift is converted into light intensity information when returned light is further interfered by means of the coupling module, and the information is detected by the photoelectric detection module. Through a signal detected by the photoelectric detection module, $\varphi r$ can be extracted, and then the rotation speed information can be acquired. When $\varphi_0$ is $\pi/2+k*\pi$, k being an arbitrary integer, the interferometric optical gyroscope is at the optimal working point.

The optimal working point is a point on a curve of light intensity versus angular velocity where a slope is greatest, that is, where the change is the most sensitive. By setting a cross-section size and shape of a waveguide of the helical waveguide coil and a length of the wavelength, the initial $\varphi_0$ can be set to be $\pi/2+k*\pi$, k being an arbitrary integer so as to enable the gyroscope to be at the optimal working point and also, by means of the phase modulation module, the gyroscope is adjusted to be at the optimal working point. In other specific embodiments, the total phase $\varphi_{total}$ detected by the photoelectric detection module satisfies:

$$\varphi_{total}=\varphi_0+\varphi_r=\left(n_{eff,\ TE}-n_{eff,\ TM}\right)\frac{2\pi L}{\lambda}+\frac{8\pi A}{c\lambda}\ \Omega\ ;$$

wherein, $n_{eff,\ TE}$ and $n_{eff,\ TM}$ are effective refractive indexes of the polarization light in the TE polarization state and the polarization light in the TM polarization state in the helical waveguide coil respectively, L is a total length of the helical coil, $\lambda$ is a working wavelength, A is a total area of the helical waveguide coil, c is a vacuum light speed, and $\Omega$ is an angular speed to be detected.

In a fourth aspect, the present invention provides a method for calculating rotation speed information of a gyroscope assembly, which is used for acquiring rotation speed information by means of the gyroscope assembly of any one in the second aspect, including: splitting one beam of light waves into two beams of light waves in a TE polarization state in each gyroscope; converting the two beams of light waves in the TE polarization state into one beam of light waves in a TE polarization state and one beam of light waves in a TM polarization state; transmitting the beam of light waves in the TE polarization state and the beam of light waves in the TM polarization state by means of helical waveguide modules of the two gyroscope respectively, the light waves in the TE polarization state and the light waves in the TM polarization state having opposite directions in the helical waveguide modules of the two gyroscopes; converting the beam of light waves in the TE polarization state and the beam of light waves in the TM polarization state into two beams of light waves in the TE polarization state and then combining the two beams into one beam of synthesized light waves; calculating first light intensity information detected by a photoelectric detection module of a first gyroscope and converting the first light intensity information into first total phase information; calculating second light intensity information detected by a photoelectric detection module of a second gyroscope and converting the second light intensity information into second total phase information; and averaging the first total phase information and the second total phase information so as to acquire rotation speed information.

In order to reduce or eliminate the influence of the environment on the fixed phase difference $\varphi_0$, the present embodiment can be further expanded. For example, two of the integrated interferometric optical gyroscopes are included and have the same helical waveguide coil. However, light inlet and outlet directions of the second integrated interferometric optical gyroscope are adjusted such that propagation directions of the polarization light in the TE polarization state and the polarization light in the TM polarization state in the two integrated interferometric optical gyroscopes are opposite to each other, which are counterclockwise and clockwise respectively. In this way, a fixed phase difference generated by light in the TE polarization state and light in the TM polarization state in the second integrated interferometric optical gyroscope after passing through the coil is opposite to that of the first integrated interferometric optical gyroscope, that is, $-\varphi_0$, while a phase difference generated by rotation is the same as that of the first integrated interferometric optical gyroscope, that is, $\varphi_r$. A total phase change $\varphi_{total}$ generated by the first integrated interferometric optical gyroscope satisfies:

$$\varphi_{total}=\varphi_0+\varphi_r=\left(n_{eff,\ TE}-n_{eff,\ TM}\right)\frac{2\pi L}{\lambda}+\frac{8\pi A}{c\lambda}\ \Omega\ ;$$

wherein, $n_{eff,\ TE}$ and $n_{eff,\ TM}$ are effective refractive indexes of the polarization light in the TE polarization state and the polarization light in the TM polarization state in the helical waveguide coil respectively, L is a total length of the helical coil, $\lambda$ is a working wavelength, A is a total area of the helical waveguide coil, c is a vacuum light speed, and $\Omega$ is an angular speed to be detected.

A total phase change $\varphi_{total}''$ generated by the second integrated interferometric optical gyroscope satisfies:

$$\varphi_{total}''=-\varphi_0+\varphi_r=-\left(n_{eff,\ TE}-n_{eff,\ TM}\right)\frac{2\pi L}{\lambda}+\frac{8\pi A}{c\lambda}\ \Omega$$

wherein, $n_{eff,\ TE}$ and $n_{eff,\ TM}$ are effective refractive indexes of the polarization light in the TE polarization state and the polarization light in the TM polarization state in the helical waveguide coil respectively, L is a total length of the helical coil, $\lambda$ is a working wavelength, A is a total area of the helical waveguide coil, c is a vacuum light speed, and $\Omega$ is an angular speed to be detected. Next, by averaging the phases generated by the two integrated interferometric optical gyroscopes, the term $\varphi_0$ can be eliminated, that is, the influence of system errors, drifting or disturbance is eliminated, and a different phase shift $\varphi_r$ experienced by the two counter-propagating paths of light satisfies:

$$\frac{(\varphi_{total}+\varphi_{total}'')}{2}=\varphi_r=\frac{8\pi A}{c\lambda}\ \Omega$$

wherein, $\lambda$ is a working wavelength, A is a total area of the helical waveguide coil, c is a vacuum light speed, and $\Omega$ is an angular speed to be detected.

In a fifth aspect, the present invention provides an interferometric optical gyroscope system, including a peripheral circuit, a mechanical packaging component and the gyroscope of any one in the first aspect, wherein the peripheral circuit includes at least one of a processor, a controller, a driver, a signal collector, a calibrator and a temperature sensor; the mechanical packaging component includes at least one of a housing, a base, a gasket, an optical/electrical interface, a damper, and an MEMS; and other optical component includes at least one of a lens, a prism, a reflector, an isolator, an optical coating, an optical fiber connecting line and an interface.

Optionally, the three optical gyroscope systems are placed in three directions for detecting angular speed information of the three directions, and the three optical gyroscope systems cooperate with three external acceleration sensors to form an inertial sensing system.

BRIEF DESCRIPTION OF DRAWINGS

FIG. 1 shows a schematic structural diagram of an optical gyroscope in the prior art;

FIG. 2 shows a schematic structural diagram of an integrated interferometric optical gyroscope provided by the present invention;

FIG. 3 shows a schematic structural diagram of an integrated interferometric optical gyroscope including a phase modulation module, a polarization control module and a variable optical attenuation module provided by the present invention;

FIG. 4 shows optical field mode spots at a cross section of a waveguide under polarization in a TE polarization state and a TM polarization state provided by the present invention;

FIG. 5 shows a schematic diagram of inputting polarization light in a TE polarization state to a polarization splitting rotation module from a first end of the polarization splitting rotation module provided by the present invention;

FIG. 6 shows a schematic diagram of inputting polarization light in a TE polarization state to a polarization splitting rotation module from a second end of the polarization splitting rotation module provided by the present invention;

FIG. 7 shows a schematic diagram of inputting polarization light in a TM polarization state to a polarization splitting rotation module from a third end of the polarization splitting rotation module provided by the present invention;

FIG. 8 shows a schematic diagram of inputting polarization light in a TE polarization state to a polarization splitting rotation module from a third end of the polarization splitting rotation module provided by the present invention;

FIG. 9 shows a schematic structural diagram of a gyroscope in which a coupling module is simultaneously connected to a light source module and a photoelectric detection module provided by the present invention;

FIG. 10 shows a schematic structural diagram of a tap coupler connected to two photoelectric detection modules provided by the present invention;

FIG. 11 shows a schematic structural diagram of a variable optical attenuation module connected to two photoelectric detection modules provided by the present invention;

FIG. 12 shows a schematic structural diagram of a system composed of two gyroscopes with opposite connection positions of light source modules and photoelectric detection modules provided by the present invention;

FIG. 13 shows a schematic structural diagram of a system composed of the two gyroscopes with different port directions of polarization splitting rotation modules provided by the present invention;

FIG. 14 shows a schematic structural diagram of two gyroscopes sharing one light source module provided by the present invention;

FIG. 15 shows a schematic flow diagram of a method for calculating rotation speed information of a gyroscope provided by the present invention;

FIG. 16 shows a schematic flow diagram of a method for calculating rotation speed information of a gyroscope assembly provided by the present invention;

FIG. 17 shows a schematic structural diagram of an interferometric optical gyroscope system provided by the present invention;

FIG. 18 shows a schematic structural diagram of spatial distribution of three interferometric optical gyroscope systems provided by the present invention.

Labels in the figures:

1. Light source module; 11. First light source module; 12. Second light source module;

21. First coupling module; 22. Second coupling module; 23. Third coupling module; 24. Fourth coupling module;

31. First phase modulation module; 32. Second phase modulation module; 33. Third phase modulation module; 34 Fourth phase modulation module;

41. First polarization splitting rotation module; 42. Second polarization splitting rotation module; 43. Third polarization splitting rotation module; 44. Fourth polarization splitting rotation module;

5. Helical waveguide module; 51. First helical waveguide module; 52. Second helical waveguide module;

61. First polarization control module; 62. Second polarization control module; 63. Third polarization control module; 64. Fourth polarization control module;

71. First variable optical attenuation module; 72. Second variable optical attenuation module; 73. Third variable optical attenuation module; 74. Fourth variable optical attenuation module

8. Photoelectric detection module; 81. First photoelectric detection module; 82. Second photoelectric detection module;

91. First end of the polarization splitting rotation module; 92. Second end of the polarization splitting rotation module;

93. Third end of the polarization splitting rotation module.


## SPECIFIC EMBODIMENTS

In order to make the objectives, technical solutions and advantages of the present invention clearer, the technical solutions in the embodiments of the present invention will be clearly and completely described below with reference to the accompanying drawings. Obviously, the embodiments mentioned are part of the embodiments of the present invention, but not all of the embodiments. According to the embodiments of the present invention, all other embodiments achieved by common technicians in the art without devoting any creative effort are all within the scope of protection of the present invention. Unless otherwise defined, technical or scientific terms used herein shall have the meanings commonly understood by those of ordinary skill in the art to which the present invention belongs. The term "include" and other similar terms used herein are intended to indicate that the component or item appearing before the term includes the component or item appearing after the word and the equivalents thereof, and does not exclude other components or items.

FIG. 1 shows a schematic structural diagram of an optical gyroscope in the prior art. FIG. 2 shows a schematic structural diagram of an integrated interferometric optical gyroscope provided by the present invention.

In view of problems in the prior art, as shown in FIG. 2, the present invention provides an integrated interferometric optical gyroscope including a light source module 1, a first coupling module 21, a second coupling module 22, at least two polarization splitting rotation modules, a photoelectric detection module 8 and a helical waveguide module 5. The first coupling module 21 is configured for splitting one beam of light waves emitted by the light source module 1 into two beams of light waves. The two polarization splitting rotation modules are coupled to a telecentric end and a pericentric end of the helical waveguide module 5 respectively and are configured for converting the two beams of light waves in a same TE polarization state (i.e. TE mode) into a TE polarization state (i.e. TE mode) and a TM polarization state (i.e. TM mode), sending the light waves to two ends of the helical waveguide module 5 to enable the light waves to be transmitted in opposite directions in the helical waveguide module 5 respectively, then converting the polarization states of the two beams of light back to the same TE mode by receipt of the two beams of light passed through the helical waveguide module 5. The second coupling module 22 is configured for combining the two beams of light waves outputted from the telecentric end and the pericentric end of the helical waveguide module 5 and passing through the polarization splitting rotation modules into one beam of synthesized light waves. The photoelectric detection module 8 is coupled to the second coupling module 22 and is configured for acquiring rotation speed information of the gyroscope according to the synthesized light waves.

Specifically, referring to FIG. 2, both the first coupling module 21 and the second coupling module 22 are 1*2 couplers.

The first coupling module 21 is configured for splitting one beam of TE light waves from the light source module 1 into two beams of light waves in a TE polarization state (i.e. TE mode). One beam of light waves in the TE polarization state (i.e. TE mode) is configured to pass through the first polarization splitting rotation module 41 and is converted into light waves in the TM mode. The light wave in the TM mode is transmitted from the telecentric end of the helical waveguide module 5 to the pericentric end of the helical waveguide module 5 and then, by passing through the second polarization splitting rotation module 42, is converted into light waves back in a TE mode, and is transmitted to the photoelectric detection module 8 through the second coupling module 22.

Meanwhile, the other beam of light waves in the TE mode is configured to pass through the second polarization splitting rotation module 42 and is transmitted from the pericentric end of the helical waveguide module 5 to the telecentric end of the helical waveguide module 5. Later, the light wave in the TE mode passes through the first polarization splitting rotation module 41 and is transmitted to the photoelectric detection module 8 through the second coupling module 22.

In other specific embodiments, the light source module 1 is an on-chip hybrid integrated or heterogeneous integrated light source, with an integrated material including, but not limited to, III-V/silicon, III-V/silicon nitride, III-V/thin-film lithium niobate, III-V/alumina, III-V/silicon dioxide, and III-V/polymer.

In still other specific embodiments, the light source module 1 can be an external light source, which is coupled into a gyroscope chip.

In yet still other embodiments, the light source module 1 includes, but is not limited to, a distributed feedback laser (DFB), a distributed Bragg reflector (DBR), a super luminescent diode (SLD), a light-emitting diode (LED), a vertical cavity surface emitting laser (VCSEL), an amplified spontaneous emission (ASE), and an optical amplifier.

It is worth noting that, the two polarization splitting rotation modules in the integrated interferometric optical gyroscope provided by the present invention are respectively coupled to the telecentric end and the pericentric end of the helical waveguide module 5, and the two beams of light waves are respectively transmitted by means of the helical waveguide module 5 in the TE polarization state and in the TM polarization state, such that the two beams of light waves have a fixed phase difference in an initial state of the gyroscope (that is, when a rotation angular speed is zero), and the fixed phase difference can be reasonably designed to enable the integrated interferometric optical gyroscope to work at an optimal working point so as to acquire the rotation speed information more effectively . The second coupling module 22 provided by the present invention is configured for combining two beams of light waves outputted from the telecentric end and the pericentric end into one beam of synthesized light waves, and the photoelectric detection module 8 is coupled to the second coupling module 22. No circulator is required, no reflected light is generated towards the light source, a loss of the light waves can be avoided, and the performance of the optical gyroscope can be improved.

In some embodiments, the polarization splitting rotation module is configured for converting two beams of light waves in a same TE polarization state into one beam of light waves in a TE polarization state superposed with a TM polarization state. Or, the polarization splitting rotation module is configured for converting one beam of light waves in a TE polarization state superposed with a TM polarization state into two beams of light waves in a TE polarization state. The helical waveguide module 5 simultaneously supports transmission therein of polarization light in both TE polarization state and TM polarization state in the same helical waveguide module 5, such that light waves in the TE polarization state and light waves in the TM polarization state can be transmitted in opposite directions.

Specifically, the polarization splitting rotation module includes, but is not limited to, an adiabatic coupler, a bend coupler, a directional coupler, a Y-branch, a multi-mode interference structure, a sub-wavelength structure, and a multilayer waveguide structure.

In other specific embodiments, the helical waveguide module 5 includes a single-mode waveguide or a multi-mode waveguide. The helical waveguide coil can be in a shape of a circular helix, a rounded square helix, a rounded polygonal helix, or the like. Implementation modes of waveguide crossing can include, but are not limited to, multi-mode waveguide crossing, nonlinear optimization crossing, multilayer waveguide crossing, and waveguide crossing of different material layers. A waveguide type of the integrated interferometric optical gyroscope includes at least one of a channel waveguide, a ridge waveguide, a slot waveguide, a diffused waveguide and a photonic crystal waveguide.

In still some specific embodiments, the coupling module can be a 1*2 coupler or a 2*2 coupler, including but not limited to at least one of a Y-shaped branch, a trident branch, a multi-mode interferometer, a directional coupler, an adiabatic coupler, a bend coupler, a photonic crystal optical splitter, and a sub-wavelength optical splitter, as long as a splitting ratio of the two outputs is 50/50.

In yet still some specific embodiments, the photoelectric detection module 8 includes, but is not limited to, a germanium detector, a silicon detector, a germanium-silicon detector, a III-V detector, a metal-semiconductor-metal detector, or an avalanche photoelectric detector.

FIG. 3 shows a schematic structural diagram of a gyroscope including a phase modulation module, a polarization control module and a variable optical attenuation module provided by the present invention.

As shown in FIG. 3, in some embodiments, a polarization control module is also included. The polarization control module is coupled to at least one polarization splitting rotation module, and is configured for adjusting a polarization mode of light waves.

Specifically, a first polarization control module 61 is coupled to the first polarization splitting rotation module 41. A second polarization control module 62 is coupled to the second polarization splitting rotation module 42. And still referring to FIG. 2, both the first coupling module 21 and the second coupling module 22 are 1*2 couplers. The first coupling module 21 is configured for splitting one beam of light waves from the light source module 1 into two beams of light waves in a TE polarization state. One beam of light wave in the TE polarization state passing through a first phase modulation module 31 is converted into light waves in a TM polarization state by the first polarization splitting rotation module 41. The light wave in the TM polarization state is transmitted from the telecentric end of the helical waveguide module 5 to the pericentric end of the helical waveguide module 5, and then, by passing through the second polarization splitting rotation module 42, is converted into light waves in a TE polarization state, and is transmitted to the photoelectric detection module 8 through the second polarization control module 62, a second variable optical attenuation module 72 and the second coupling module 22.

Meanwhile, one beam of light waves in the TE polarization state, passing through a second phase modulation module 32 and further through the second polarization splitting rotation module 42, still remains the TE mode and is transmitted from the pericentric end of the helical waveguide module 5 to the telecentric end of the helical waveguide module 5. Later, the light wave in the TE mode passing through the first polarization splitting rotation module 41 still remain the TE mode and is transmitted to the photoelectric detection module 8 through the first polarization control module 61, a first variable optical attenuation module 71 and the second coupling module 22.

It is worth noting that a structural form of the polarization control module includes, but is not limited to, a cascaded bend waveguide, a cascaded multilayer waveguide converter, a locally doped silicon waveguide, a variable doped silicon PIN junction, and a variable doped silicon PN junction.

Referring to FIG. 3, in some embodiments, a variable optical attenuation module is also included. The variable optical attenuation module is coupled to the second coupling module 22, and is configured for adjusting relative intensity of light waves on two interferometric arms, so as to improve interference effects.

Specifically, a structural form of the variable optical attenuation module includes, but is not limited to, a variable Mach-Zehnder interferometer, a variable doped silicon PIN junction, a variable doped silicon PN junction, and an electro-absorption modulator. The variable optical attenuation module can be used for adjusting the light intensity on the two arms, that is, compensating an optical loss difference under the TE polarization state and the TM mode polarization state. Sources of the optical loss difference include an optical transmission loss difference of the TE mode and TM mode light in the helical waveguide coil, an optical insertion loss difference of the polarization splitting rotation module, an optical insertion loss difference of waveguide crossing, an optical insertion loss difference of the two arms caused by particles or processing defects, and the like, which further enables the two paths of light to have the same or nearly the same light intensity before interference, so as to achieve the best interference effect, that is, the best gyroscope rotation speed information detection capability. The variable optical attenuator can be placed on one or both arms of the interferometer.

Referring to FIG. 3, in some embodiments, a phase modulation module is also included.

The phase modulation module is respectively coupled to the first coupling module 21 and the at least one polarization splitting rotation module, and is configured for modulating a phase of light waves.

Specifically, the phase modulation module is a phase shifter (PS), which can be used for adjusting an optimal working point of the interferometric optical gyroscope, can be used for compensating an initial phase shift caused by a machining error, and can also be used for loading high-frequency signals onto the light waves.

It is worth noting that a structural form of the phase shifter includes, but is not limited to, a titanium nitride heater, a doped silicon heater, a silicon PN junction, a silicon PIN junction, a piezoelectric ceramic device, and a micro-electro-mechanical system (MEMS) structure, a polymer phase shifter, a lithium niobate phase shifter, a III-V phase shifter, other compound phase shifter and the like. The phase shifter can be on both arms or on only one arm. The phase shifters on the two arms can work in a push-pull, differential, or other form. The phase shifter can be placed on one or both arms of the interferometer.

It is worth noting that relative positions of the phase modulation module, the polarization control module, and the variable optical attenuation module are not limited to those shown in the above figure, and the positions can also be exchanged or the order can be adjusted. One or more of the modules can also be omitted as needed to simplify system complexity.

In some embodiments, a delay line (not shown in the figure) is also included. The delay line is respectively coupled to the light source module 1 and the first coupling module 21, and is configured for delaying light waves.

Specifically, the delay line is connected between the light source module 1 and the first coupling module 21. The delay line can be in a shape of a circular helix, a rounded square helix, a rounded polygonal helix, an external optical fiber waveguide, or the like.

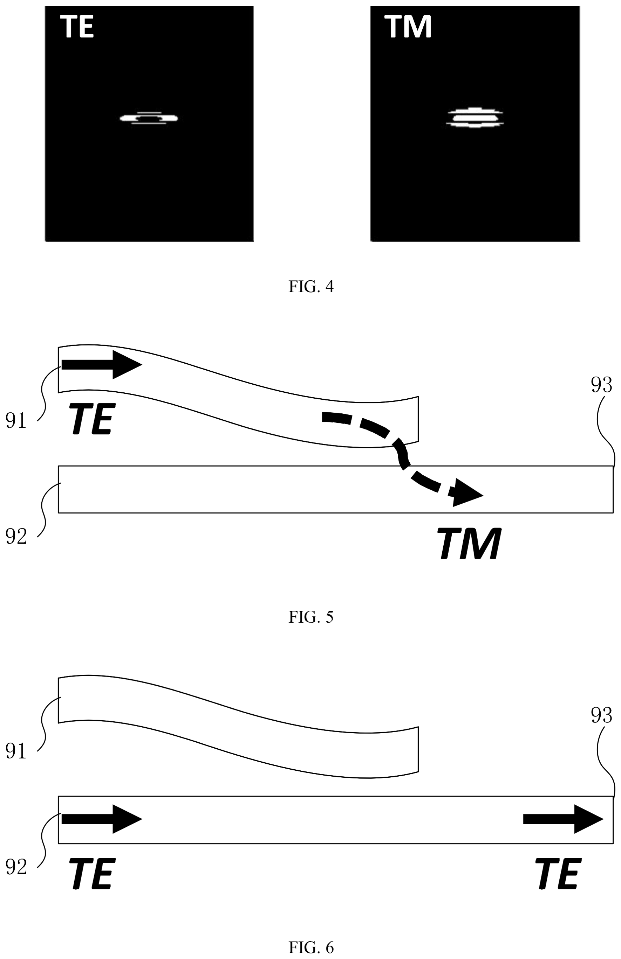

FIG. 4 shows optical field mode spots at a cross section of a waveguide under polarization in a TE mode and a TM mode provided by the present invention

As shown in FIG. 4, observing the optical field mode spots at the cross section of the waveguide, it can be seen that light in both TE and TM polarization modes can be supported by the waveguide, that is, can be propagated along the waveguide.

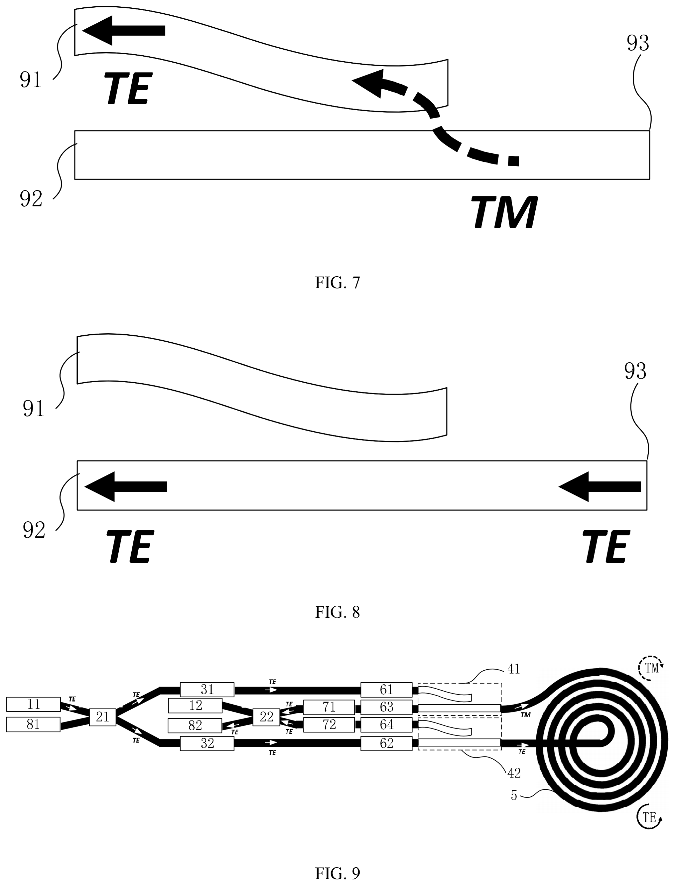

FIG. 5 shows a schematic diagram of inputting polarization light in a TE mode to a polarization splitting rotation module from a first end of the polarization splitting rotation module provided by the present invention. FIG. 6 shows a schematic diagram of inputting polarization light in a TE mode to a polarization splitting rotation module from a second end of the polarization splitting rotation module provided by the present invention. FIG. 7 shows a schematic diagram of inputting polarization light in a TM mode to a polarization splitting rotation module from a third end of the polarization splitting rotation module provided by the present invention. FIG. 8 shows a schematic diagram of inputting polarization light in a TE mode to a polarization splitting rotation module from a third end of the polarization splitting rotation module provided by the present invention.

As shown in FIGS. 5-8, the polarization splitting rotation module has three ends. When the first end 91 of the polarization splitting rotation module or the second end 92 of the polarization splitting rotation module is configured for inputting light waves, the third end 93 of the polarization splitting rotation module is configured for outputting light waves.

When the third end 93 of the polarization splitting rotation module is configured for inputting light waves, the first end 91 of the polarization splitting rotation module or the second end 92 of the polarization splitting rotation module is configured for outputting light waves. The polarization splitting rotation module has reversibility.

Referring to FIG. 5, specifically, when the first end 91 of the polarization splitting rotation module inputs light waves in the TE mode, the third end 93 of the polarization splitting rotation module outputs light waves in the TM mode.

Referring to FIG. 6, in other specific embodiments, when the second end 92 of the polarization splitting rotation module inputs light waves in the TE mode, the third end 93 of the polarization splitting rotation module outputs light waves in the TE mode.

Referring to FIG. 7, in still some specific embodiments, when the third end 93 of the polarization splitting rotation module inputs light waves in the TM mode, the first end 91 of the polarization splitting rotation module outputs light waves in the TE mode.

Referring to FIG. 8, in yet still some specific embodiments, when the third end 93 of the polarization splitting rotation module inputs light waves in the TE mode, the second end 92 of the polarization splitting rotation module outputs light waves in the TE mode.

FIG. 9 shows a schematic structural diagram of a gyroscope in which a coupling module is simultaneously coupled to a light source module and a photoelectric detection module provided by the present invention.

As shown in FIG. 9, in some embodiments, the first coupling module 21 is coupled to the first light source module 11 and the first photoelectric detection module 81, and the second coupling module 22 is coupled to the second light source module 12 and the second photoelectric detection module 82.

Specifically, both the first coupling module 21 and the second coupling module 22 are 2*2 couplers. In a first period of time, the first coupling module 21 is configured for splitting one beam of light waves from the first light source module 11 into two beams of light waves. And still referring to FIG. 5, one beam of light waves in the TE mode passing through the first phase modulation module 31 and the first polarization control module 61 is converted into light waves in a TM mode by the first polarization splitting rotation module 41, and is further transmitted from the telecentric end of the helical waveguide module 5 to the pericentric end of the helical waveguide module 5. And still referring to FIG. 7, later, the light wave in the TM mode, by passing through the second polarization splitting rotation module 42, is converted to light waves in the TE mode, and is further transmitted to the second photoelectric detection module 82 through a fourth polarization control module 64, the second variable optical attenuation module 72 and the second coupling module 22.

Meanwhile, still referring to FIG. 6, one beam of light waves in the TE mode passing through the second phase modulation module 32 and then through the second polarization splitting rotation module 42 still remains the TE mode and is transmitted from the pericentric end of the helical waveguide module 5 to the telecentric end of the helical waveguide module 5. And still referring to FIG. 8, later, the light wave in the TE mode passing through the first polarization splitting rotation module 41 still remain the TE mode and is transmitted to the second photoelectric detection module 82 through the third polarization control module 63, the first variable optical attenuation module 71 and the second coupling module 22.

In other specific embodiments, in a second period of time, the second coupling module 22 is configured for splitting one beam of light waves from the second light source module 12 into two beams of light waves. And still referring to FIG. 6, one beam of light waves in the TE mode passing through the first variable optical attenuation module 71 and the third polarization control module 63, and further through the first polarization splitting rotation module 41 still remains the TE mode and is transmitted from the telecentric end of the helical waveguide module 5 to the pericentric end of the helical waveguide module 5. And still referring to FIG. 8, later, the light wave in the TE mode passing through the second polarization splitting rotation module 42 still remain the TE mode and is transmitted to the first photoelectric detection module 81 through the second polarization control module 62, the second phase modulation module 32 and the first coupling module 21.

Meanwhile, and still referring to FIG. 5, one beam of light waves in the TE mode passing through the second variable optical attenuation module 72 and the fourth polarization control module 64, and further the second polarization splitting rotation module 42 is converted to the TM mode and is transmitted from the pericentric end of the helical waveguide module 5 to the telecentric end of the helical waveguide module 5. And still referring to FIG. 7, later, the light wave in the TM mode passing through the first polarization splitting rotation module 41, is converted to the TE mode and is further transmitted to the first photoelectric detection module 81 through the first polarization control module 61, the first phase modulation module 31 and the first coupling module 21.

It is worth noting that the above first period of time and the second period of time can be alternately circulated to realize work of time division multiplexing, and signals of the integrated interferometric optical gyroscope in different periods of time can be collected.

In still some specific embodiments, two polarization control modules (not shown in the figure) can be additionally added, such that the light can be subjected to polarization control before entering the helical waveguide and after leaving the helical waveguide.

It is worth noting that an integrated material platform on which the integrated interferometric optical gyroscope is formed includes silicon, silicon-on-insulator, silicon-on-sapphire, silicon nitride-on-insulator, silicon dioxide, aluminum oxide, indium phosphide, lithium niobate, polymer, and the like. The integrated interferometric optical gyroscope device can be based on the same material platform, or can also be based on different material platforms and is integrated through wafer bonding, heterogeneous growth, and optical coupling between different chips (not shown). A working wavelength range of the gyroscope includes at least one of a visible light wave band, an O wave band, an E wave band, an S wave band, a C wave band, an L wave band, a U wave band and a mid-infrared wave band.

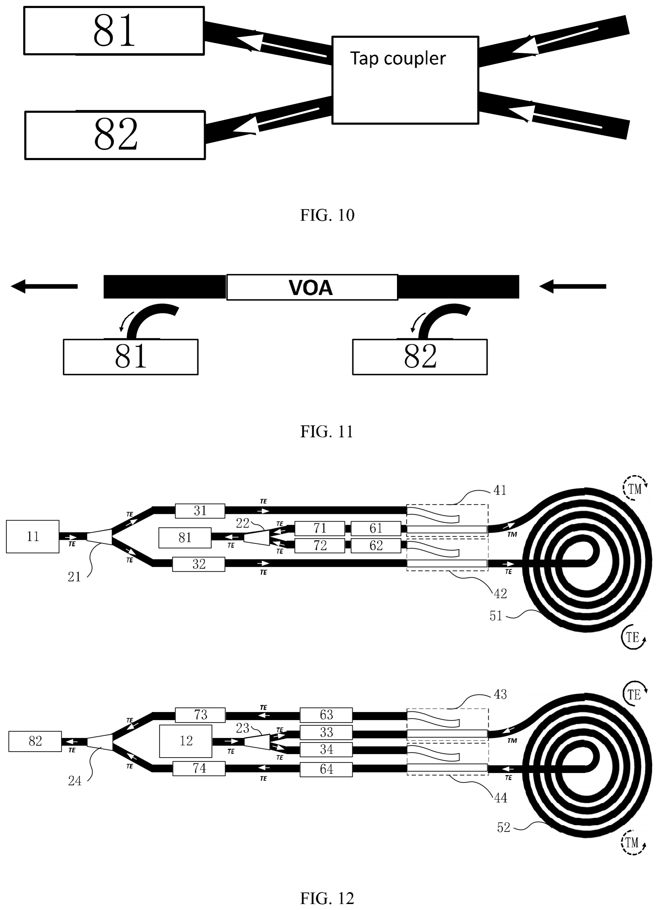

FIG. 10 shows a schematic structural diagram of a tap coupler connected to two photoelectric detection modules provided by the present invention.

As shown in FIG. 10, it is worth noting that when the embodiments in FIG. 2 and FIG. 3 adopt the 2*2 couplers, a photoelectric detection module 8 can be coupled to each of two light outlet ports of the 2*2 coupler, that is, two photoelectric detection modules 8 are adopted, and as shown in FIG. 10, the first photoelectric detection module 81 and the second photoelectric detection module 82 can process detection signals by performing a difference. In addition, if required, a tap coupler can be added after the variable optical attenuation module of the integrated interferometric optical gyroscope and the first photoelectric detection module 81 and the second photoelectric detection module 82 are coupled so as to detect optical signal information at some positions.

FIG. 11 shows a schematic structural diagram of a variable optical attenuation module coupled to two photoelectric detection modules provided by the present invention.

As shown in FIG. 11, the variable optical attenuation module is coupled to the tap couplers at the front and the rear and is coupled to the photoelectric detection module 8. The photoelectric detection module 8 can be integrated on a chip or externally arranged and is coupled to an inside of the chip through optical couple.

In some embodiments, the light source module 1 and the photoelectric detection module 8 can be placed outside the integrated chip and coupled to the inside of the chip through optical couple according to use requirements or integratable conditions. In this condition, an end face coupler or a grating coupler can be adopted to couple the light into or out of the chip, and a coupling mode includes, but is not limited to, at least one of lens convergence coupler, optical fiber butt coupler, and evanescent wave coupler. A structural design of the end face coupler can include, but is not limited to, at least one of a reverse taper, a stepped reverse taper, a cantilever beam, a plurality of waveguides, a multilayer waveguide, and a sub-wavelength structure. A structural design of the grating coupler includes, but is not limited to, at least one of a straight grating, a fan-shaped curved grating, a dual-polarization grating and a multilayer material grating.

It should be understood that FIGS. 2, 3, and 9 are only structural schematic diagrams, and in actual use, a waveguide direction, a bending direction, a placement direction, a placement position of each module, and a relative sequence can be appropriately adjusted. A plurality of the integrated interferometric optical gyroscopes in FIGS. 2, 3, and 9 can form an array.

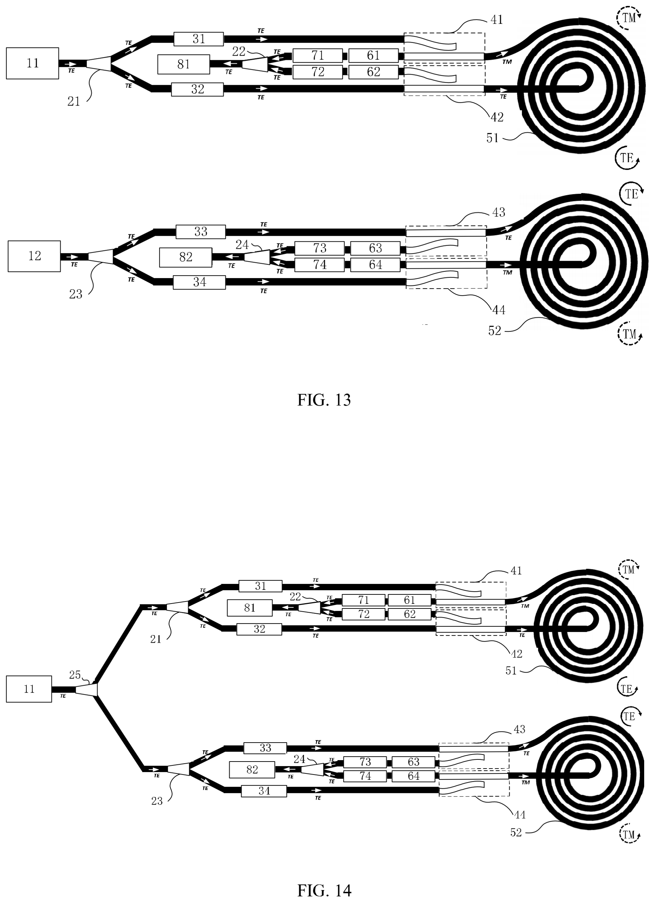

FIG. 12 shows a schematic structural diagram of a system composed of two gyroscopes having light source modules with opposite connection positions and photoelectric detection modules provided by the present invention. FIG. 13 shows a schematic structural diagram of a system composed of the two gyroscopes having polarization splitting rotation modules with different port directions provided by the present invention. FIG. 14 shows a schematic structural diagram of two gyroscopes sharing one light source module provided by the present invention.

As shown in FIGS. 12-14, the present invention provides an optical gyroscope assembly, including the two gyroscopes of any one in the above embodiments, wherein propagation directions of polarization light in the TE mode in the two gyroscopes are opposite to each othe, and propagation directions of polarization light in the TM mode in the two gyroscopes are opposite to each other.

Referring to FIG. 12, specifically, light source modules 1 and photoelectric detection modules 8 in the two gyroscopes are coupled in opposite positions.

More specifically, for the first gyroscope, one beam of light waves emitted by the first light source module 11 passes through the first coupling module 21 and is split into two beams of light waves in the TE mode. And still referring to FIG. 5, light wave in the TE mode passing through the first phase modulation module 31 is converted to the TM mode through the first polarization splitting rotation module 41 and is transmitted from the telecentric end of the first helical waveguide module 51 to the pericentric end of the first helical waveguide module 51. And still referring to FIG. 7, later, the light waves in the TM mode, is converted to the TE mode through the second polarization splitting rotation module 42, and is transmitted to the first photoelectric detection module 81 through the second polarization control module 62, the second variable optical attenuation module 72 and the second coupling module 22.

Meanwhile, and still referring to FIG. 6, light wave in the TE mode passing through the second phase modulation module 32 and further through the second polarization splitting rotation module 42 still remains the TE mode and is transmitted from the pericentric end of the first helical waveguide module 51 to the telecentric end of the first helical waveguide module 51. And still referring to FIG. 8, later, the light wave in the TE mode passing through the first polarization splitting rotation module 41 still remain the TE mode and is transmitted to the first photoelectric detection module 81 through the first polarization control module 61, the first variable optical attenuation module 71 and the second coupling module 22.

For the second gyroscope, one beam of light waves emitted by the second light source module 12 passes through the third coupling module 23 and is split into two beams of light waves in the TE mode. And still referring to FIG. 6, light wave in the TE mode passing through the third phase modulation module 33 still remain the TE mode through the third polarization splitting rotation module 43 and is transmitted from the telecentric end of the second helical waveguide module 52 to the pericentric end of the second helical waveguide module 52. And still referring to FIG. 8, later, the light wave in the TE mode passing through the fourth polarization splitting rotation module 44 still remain the TE mode and is transmitted to the second photoelectric detection module 82 through the fourth polarization control module 64, the fourth variable optical attenuation module 74 and the fourth coupling module 24.

Meanwhile, and still referring to FIG. 5, the light wave in the TE mode passing through the fourth phase modulation module 34 is converted to the TM mode through the fourth polarization splitting rotation module 44 and is transmitted from the pericentric end of the second helical waveguide module 52 to the telecentric end of the second helical waveguide module 52. And still referring to FIG. 7, later, the light wave in the TM mode passing through the third polarization splitting rotation module 43 is converted to the TE mode, and is further transmitted to the second photoelectric detection module 82 through the third polarization control module 63, the third variable optical attenuation module 73 and the fourth coupling module 24.

Referring to FIG. 13, in other embodiments, the polarization splitting rotation modules of the two gyroscopes have different port directions.

More specifically, and still referring to FIGS. 5 and 14, the first end 91 of the polarization splitting rotation module of the first polarization splitting rotation module 41 is coupled to the first phase modulation module 31. The second end 92 of the polarization splitting rotation module of the first polarization splitting rotation module 41 is coupled to the first polarization control module 61.

The first end 91 of the polarization splitting rotation module of the second polarization splitting rotation module 42 is coupled to the second polarization control module 62. The second end 92 of the polarization splitting rotation module of the second polarization splitting rotation module 42 is coupled to the second phase modulation module 32.

The first end 91 of the polarization splitting rotation module of the third polarization splitting rotation module 43 is coupled to the third polarization control module 63. The second end 92 of the polarization splitting rotation module of the third polarization splitting rotation module 43 is coupled to the third phase modulation module 33.

The first end 91 of the polarization splitting rotation module of the fourth polarization splitting rotation module 44 is coupled to the fourth phase modulation module 34. The second end 92 of the polarization splitting rotation module of the fourth polarization splitting rotation module 44 is coupled to the fourth polarization control module 64.

Referring to FIG. 14, in still some specific embodiments, the two gyroscopes share the same light source module 1. One beam of light waves emitted by the light source module 1 is split into four beams of light waves by coupling modules.

Specifically, three 1*2 couplers are set to be cascaded so as to split one beam of light waves into four beams of light waves.

In other specific embodiments, a 1*4 coupler can also be set so as to split one beam of light waves into four beams of light waves.

In addition, the above two integrated interferometric optical gyroscopes can also share the same photoelectric detection module (not shown in the figure), and signals from the two integrated interferometric optical gyroscopes in different periods of time are received in a form of time division multiplexing.

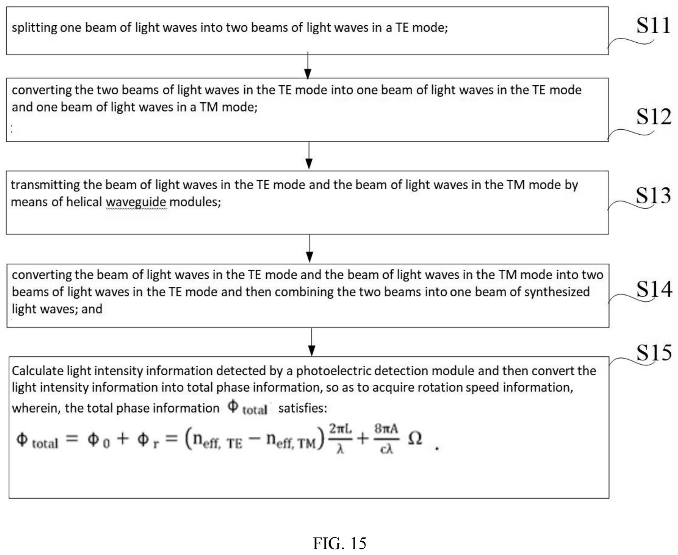

FIG. 15 shows a schematic flow diagram of a method for calculating rotation speed information of a gyroscope provided by the present invention.

As shown in FIG. 15, the present embodiment provides a method for calculating rotation speed information of a gyroscope, which is configured for acquiring rotation speed information by means of the gyroscope of any one in the above embodiments, including:

S11. Split one beam of light waves into two beams of light waves in a TE mode;

S12. Convert the two beams of light waves in the TE mode into one beam of light waves in the TE mode and one beam of light waves in a TM mode;

S13. Transmit the beam of light waves in the TE mode and the beam of light waves in the TM mode by means of a helical waveguide module;

S14. Convert the beam of light waves in the TE mode and the beam of light waves in the TM mode into two beams of light waves in the TE mode and then combining the two beams into one beam of synthesized light waves;

S15. Calculate light intensity information detected by a photoelectric detection module and then convert the light intensity information into total phase information, so as to acquire rotation speed information,

wherein, the total phase information $\varphi_{total}$ satisfies:

$$\varphi_{total}=\varphi_0+\varphi_r=\left(n_{eff,\ TE}-n_{eff,\ TM}\right)\frac{2\pi L}{\lambda}+\frac{8\pi A}{c\lambda}\ \Omega\ ;$$

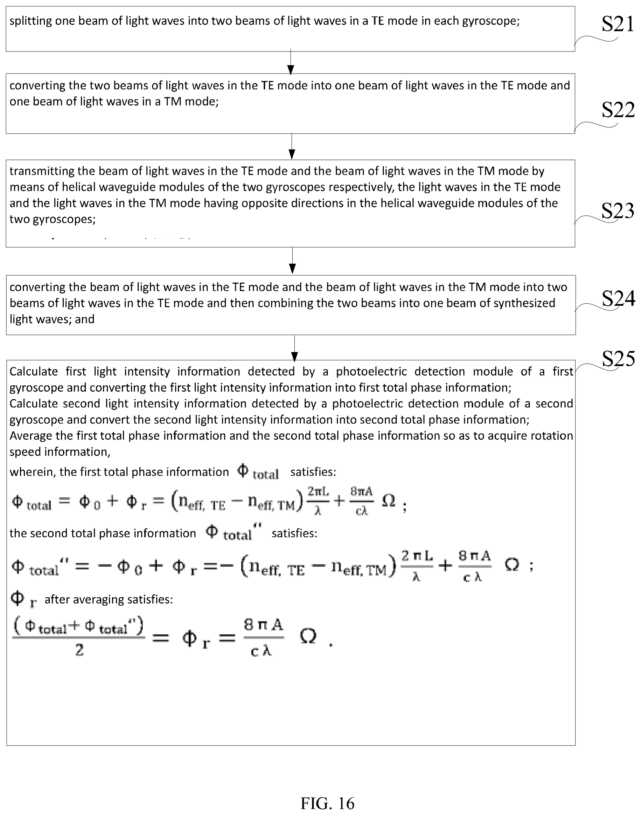

FIG. 16 shows a schematic flow diagram of a method for calculating rotation speed information of a gyroscope assembly provided by the present invention.

As shown in FIG. 16, the present embodiment provides a method for calculating rotation speed information of a gyroscope assembly, which is configured for acquiring rotation speed information by means of the gyroscope of any one in the above embodiments, including:

S21. Split one beam of light waves into two beams of light waves in a TE mode in each gyroscope;

S22. Convert the two beams of light waves in the TE mode into one beam of light waves in the TE mode and one beam of light waves in a TM mode;

S23. Transmit the beam of light waves in the TE mode and the beam of light waves in the TM mode by means of helical waveguide modules of the two gyroscope respectively, the light waves in the TE mode and the light waves in the TM mode having opposite directions in the helical waveguide modules of the two gyroscopes;

S24. Convert the beam of light waves in the TE mode and the beam of light waves in the TM mode into two beams of light waves in the TE mode and then combining the two beams into one beam of synthesized light waves;

S25. Calculate first light intensity information detected by a photoelectric detection module of a first gyroscope and convert the first light intensity information into first total phase information; calculate second light intensity information detected by a photoelectric detection module of a second gyroscope and convert the second light intensity information into second total phase information; and average the first total phase information and the second total phase information so as to acquire rotation speed information,

wherein, the first total phase information $\varphi_{total}$ satisfies:

$$\varphi_{total}=\varphi_0+\varphi_r=\left(n_{eff,\ TE}-n_{eff,\ TM}\right)\frac{2\pi L}{\lambda}+\frac{8\pi A}{c\lambda}\ \Omega\ ;$$

the second total phase information $\varphi_{total}$'' satisfies:

$$\varphi_{total}\text{''}=-\varphi_0+\varphi_r=-\left(n_{eff,\ TE}-n_{eff,\ TM}\right)\frac{2\pi L}{\lambda}+\frac{8\pi A}{c\lambda}\ \Omega;$$

and $\varphi_r$ obtained after averaging satisfies:

$$\frac{(\varphi_{total}+\varphi_{total}\text{''})}{2}=\varphi_r=\frac{8\pi A}{c\lambda}\ \Omega.$$

Referring to FIG. 3, specifically, the light emitted by the light source is in the TE mode polarization state, passes through the coupling module and is split into two paths of light, and the light passes through the phase modulation module and reaches the polarization splitting rotation module. After polarization separation rotation at the polarization splitting rotation module, the two paths of light enter the helical waveguide module 5 in the TE mode polarization state and the TM mode polarization state respectively, each propagating therein in an opposite direction. The helical waveguide coil has polarization-preserving property for polarization light in the TE mode and the TM mode, that is, the polarization state of light does not change after transmission. After the two paths of light leave the helical waveguide coil, the two paths of light passing through the polarization splitting rotation module in opposite directions are both converted into a TE mode polarization state, come out from another port different from an incident port, respectively enter the variable optical attenuation module and the polarization control module, and then enter the second coupling module to be combined and enter the photoelectric detection module 8.

As the polarization light in the TE mode and the polarization light in the TM mode have different effective refractive indexes, a fixed phase difference, represented by $\varphi_0$, is generated after the two paths of polarization light pass through the helical waveguide module 5. When the gyroscope rotates perpendicularly to a plane, the two paths of light propagating in opposite directions result in different phase shifts, represented by $\varphi_r$, which are proportional to a rotation speed. The phase shift is converted to light intensity information when returned light is further interfered by means of the coupling module, and the information is detected by the photoelectric detection module 8. Through a signal detected by the photoelectric detection module 8, $\varphi_r$ can be extracted, and then the rotation speed information can be acquired. When $\varphi_0$ is $\pi/2+k*\pi$, k being an arbitrary integer, the interferometric optical gyroscope is at the optimal working point.

The optimal working point is a point on a curve of light intensity versus angular velocity where a slope is greatest, that is, where the change is the most sensitive. By setting a cross-section size and shape of a waveguide of the helical waveguide coil and a length of the wavelength, the initial $\varphi_0$ can be set to be $\pi/2+k*\pi$, k being an arbitrary integer, so as to enable the gyroscope to be at the optimal working point and also, by means of the phase modulation module, the gyroscope is adjusted to be at the optimal working point.

In other specific embodiments, total phase $\varphi_{total}$ detected by the photoelectric detection module 8 satisfies:

$$\varphi_{total}=\varphi_0+\varphi_r=\left(n_{eff,\ TE}-n_{eff,\ TM}\right)\frac{2\pi L}{\lambda}+\frac{8\pi A}{c\lambda}\ \Omega\ ;$$

wherein, $n_{eff,\ TE}$ and $n_{eff,\ TM}$ are effective refractive indexes of the polarization light in the TE mode and the polarization light in the TM mode in the helical waveguide coil respectively, L is a total length of the helical coil, $\lambda$ is a working wavelength, A is a total area of the helical waveguide coil, c is a vacuum light speed, and $\Omega$ is an angular speed to be detected.

It is worth noting that, in the present invention, two polarization states of the TE mode and the TM mode are used, and the polarization separation rotator is configured for polarization separation and rotation, such that reflected light is prevented from returning to the light source, a circulator or a 50/50 coupler is not needed, the optical loss of an additional link is reduced, and various performances of the interferometric optical gyroscope are further improved. At the same time, manufacturing is also simplified, integration is facilitated, and the cost is reduced.

In some embodiments, the step of acquiring the rotation speed information according to the synthesized light waves includes: acquiring a phase difference value of light waves in the TE mode polarization state and the TM mode polarization state according to the synthesized light waves; acquiring light intensity information according to the phase difference value; and calculating the rotation speed information of the gyroscope according to the light intensity information.

In general, system errors, drifting or disturbance can affect the performance stability of an optical gyroscope. Specifically, in the present invention, as the polarization light in the TE mode and the polarization light in the TM mode have different effective refractive indexes, they may vary with environment temperature changes. The fixed phase difference $\varphi_0$ after the polarization light in the TE mode and the polarization light in the TM mode pass through the helical waveguide coil may also drift with time. These will be reflected in the term $\varphi_0$ in the above formula.

In order to reduce or eliminate the influence of the environment on the fixed phase difference $\varphi_0$, the present embodiment can be further expanded. Please referring to FIG. 12, the structure in FIG. 12 includes two of the integrated interferometric optical gyroscopes which have the same helical waveguide coil. However, light inlet and outlet directions of the second integrated interferometric optical gyroscope are adjusted, such that propagation directions of the polarization light in the TE mode and the polarization light in the TM mode in the two integrated interferometric optical gyroscopes are opposite to each other, which are counterclockwise and clockwise respectively, as indicated by arrows surrounding TE and TM in FIG. 12. In this way, a fixed phase difference generated by the TE mode and TM mode light in the second integrated interferometric optical gyroscope after passing through the coil is opposite to that of the first integrated interferometric optical gyroscope, that is, $-\varphi_0$, while a phase difference generated by rotation is the same as that of the first integrated interferometric optical gyroscope, that is, $\varphi_r$. That is, a total phase change $\varphi_{total}''$ generated by the second integrated interferometric optical gyroscope satisfies:

$$\varphi_{total}''=-\varphi_0+\varphi_r=-\left(n_{eff,\ TE}-n_{eff,TM}\right)\frac{2\pi L}{\lambda}+\frac{8\pi A}{c\lambda}\ \Omega$$

wherein, $n_{eff,\ TE}$ and $n_{eff,\ TM}$ are effective refractive indexes of the polarization light in the TE mode and the polarization light in the TM mode in the helical waveguide coil respectively, L is a total length of the helical coil, $\lambda$ is a working wavelength, A is a total area of the helical waveguide coil, c is a vacuum light speed, and $\Omega$ is an angular speed to be detected.

Next, by averaging the phases generated by the two integrated interferometric optical gyroscopes, the term $\varphi_0$ can be eliminated, that is, the influence of system errors, drifting or disturbance is eliminated, and a different phase shift $\varphi_r$ experienced by the two counter-propagating paths of light satisfies:

$$\frac{(\varphi_{total}+\varphi_{total}'')}{2}=\varphi_r=\frac{8\pi A}{c\lambda}\ \Omega$$

wherein, $\lambda$ is a working wavelength, A is a total area of the helical waveguide coil, c is a vacuum light speed, and $\Omega$ is an angular speed to be detected.

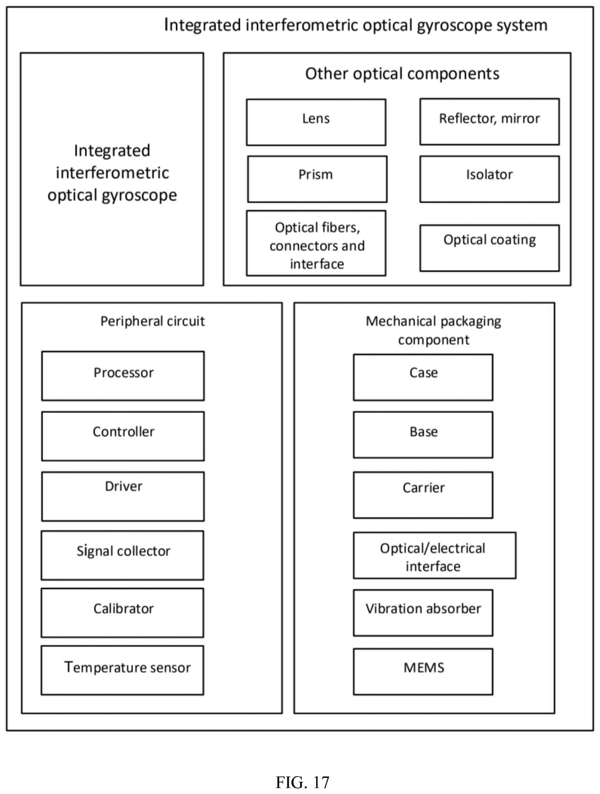

As shown in FIG. 17, the integrated interferometric optical gyroscope can be integrated into an optical gyroscope system to work in cooperation with other components in the system. The optical gyroscope system includes other optical components, a peripheral circuit and a mechanical packaging component. The other optical components include a lens, a prism, a reflector, an isolator, an optical coating, an optical fiber connecting line and an interface, and the lens includes a prism. The peripheral circuit includes a processor, a controller, a driver, a signal collector, a calibrator and a temperature sensor. The mechanical packaging component includes a housing, a base, a gasket, an optical/electrical interface, a damper, and an MEMS.

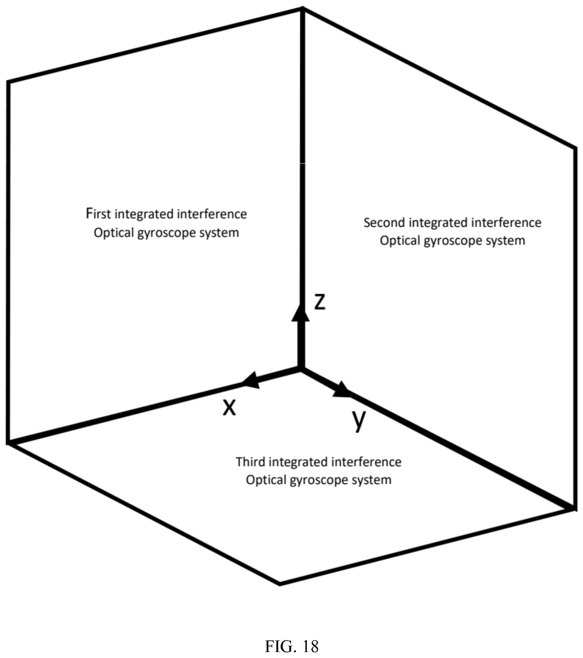

As shown in FIG. 18, the three optical gyroscope systems can be placed in three directions for detecting angular speed information of the three directions. In addition, the three optical gyroscope systems can also cooperate with three external acceleration sensors to form an inertial sensing system.

Application scenarios of the present invention include, but are not limited to, a smart wearable device, an automatic robot, a smart city, a vehicle, and a military facility. The wearable device includes a smart phone, a smart watch, a smart headset and a virtual reality/augmented reality helmet, and the vehicle includes an autonomous vehicle and an aircraft.

While embodiments of the present invention are described in detail above, it is apparent to the technicians in the art that various modifications and variations may be made to the above-described embodiments. However, it should be appreciated that such modifications and variations fall within the scope and intention of the present invention as described in the claims. Moreover, the present invention described herein may have other embodiments and may be practiced or carried out in various ways.

**Claims**

1. An integrated interferometric optical gyroscope, **characterized by** comprising a light source module, a first coupling module, a second coupling module, at least two polarization splitting rotation modules, a photoelectric detection module and a helical waveguide module, wherein

   the first coupling module is configured for splitting one beam of light waves emitted by the light source module into two beams of light waves;
   the two polarization splitting rotation modules are coupled to a telecentric end and a pericentric end of the helical waveguide module respectively, and configured for converting the two beams of light waves in a same TE polarization state into a TE polarization state and a TM polarization state, sending the light waves to two ends of the helical waveguide module to enable the light waves to be transmitted in opposite directions in the helical waveguide module respectively, then receiving the two beams of light waves passing through the helical waveguide module and converting the polarization states of the two beams of light waves back to the same TE polarization state;
   the second coupling module is configured for combining the two beams of light waves outputted from the telecentric end and the pericentric end of the helical waveguide module into one beam of synthesized light waves; and
   the photoelectric detection module is coupled to the second coupling module and is configured for acquiring rotation speed information of the gyroscope according to the synthesized light waves.

2. The gyroscope of claim 1, **characterized in that** the polarization splitting rotation module is configured for converting two beams of light waves in a TE polarization state into one beam of light waves in a TE polarization state superposed with a TM polarization state;

   or the polarization splitting rotation module is configured for converting one beam of light waves in a TE polarization state superposed with a TM polarization state into two beams of light waves in a TE polarization state; and
   the helical waveguide module is simultaneously configured to support transmission therein of polarization light waves in both TE polarization state and TM polarization state; and in the same helical waveguide module, light waves in the TE polarization state and light waves in the TM polarization state are transmitted in opposite directions.

3. The gyroscope of claim 1, **characterized by** further comprising a polarization control module, wherein the polarization control module is coupled to at least one polarization splitting rotation module, and is configured for adjusting or controlling a polarization mode of light waves.

4. The gyroscope of claim 1, **characterized by** further comprising a variable optical attenuation module, wherein the variable optical attenuation module is coupled to the second coupling module, and is configured for adjusting intensity of light waves on two interferometric arms.

5. The gyroscope of claim 1, **characterized by** further comprising a phase modulation module, wherein the phase modulation module is respectively coupled to the first coupling module and the at least one polarization splitting rotation module, and is configured for modulating a phase of light waves.

6. The gyroscope of claim 1, **characterized by** further comprising a delay line, wherein the delay line is respectively coupled to the light source module and the first coupling module, and is configured for delaying light waves.

7. The gyroscope of claim 1, **characterized in that** both the first coupling module and the second couple module are coupled to a light source module and a photoelectric detection module.

8. An optical gyroscope assembly, comprising the two gyroscopes of claims 1-7, **characterized in that** propagation directions of polarization light in the TE polarization state in the two gyroscopes are opposite to each other, and propagation directions of polarization light in the TM polarization state in the two gyroscopes are opposite to each other.

9. The assembly of claim 8, **characterized in that** light source modules and photoelectric detection modules in the two gyroscopes are coupled in opposite positions.

10. The assembly of claim 8, **characterized in that** polarization splitting rotation modules in the two gyroscopes have different port directions.

11. The assembly of claim 8 or 10, **characterized in that** the two gyroscopes share the same light source module, and one beam of light waves emitted by the light source module is split into four beams of light waves by means of coupling modules.

12. A method for calculating rotation speed information of a gyroscope, which is configured for acquiring rotation speed information by means of the gyroscope of claims 1-7, **characterized by** comprising steps of:

   splitting one beam of light waves into two beams of light waves in a TE polarization state;
   converting the two beams of light waves in the TE polarization state into one beam of light waves in the TE polarization state and one beam of light waves in a TM polarization state;
   transmitting the beam of light waves in the TE polarization state and the beam of light waves in the TM polarization state by means of helical waveguide modules;
   converting the beam of light waves in the TE polarization state and the beam of light waves in the TM polarization state into two beams of light waves in the TE polarization state and then combining the two beams into one beam of synthesized light waves; and
   calculating light intensity information detected by a photoelectric detection module and then converting the light intensity information into total phase information, so as to acquire rotation speed information.

13. A method for calculating rotation speed information of a gyroscope assembly, which is adapted for acquiring rotation speed information by means of the gyroscope assembly of claims 8-11, **characterized by** comprising steps of:

   splitting one beam of light waves into two beams of light waves in a TE polarization state in each gyroscope;
   converting the two beams of light waves in the TE polarization state into one beam of light waves in the TE polarization state and one beam of light waves in a TM polarization state;
   transmitting the beam of light waves in the TE polarization state and the beam of light waves in the TM polarization state by means of helical waveguide modules of the two gyroscopes respectively, the light waves in the TE polarization state and the light waves in the TM polarization state having opposite directions in the helical waveguide modules of the two gyroscopes;
   converting the beam of light waves in the TE polarization state and the beam of light waves in the TM polarization state into two beams of light waves in the TE polarization state and then combining the two beams into one beam of synthesized light waves; and
   calculating first light intensity information detected by a photoelectric detection module of a first gyroscope and converting the first light intensity information into first total phase information; calculating second light intensity information detected by a photoelectric detection module of a second gyroscope and converting the second light intensity information into second total phase information; and averaging the first total phase information and the second total phase information so as to acquire rotation speed information.

14. An interferometric optical gyroscope system, **characterized by** comprising a peripheral circuit, a mechanical packaging component, other optical components, and the gyroscope of claims 1-7 or the gyroscope assembly of claims 8-11, wherein

the peripheral circuit comprises at least one of a processor, a controller, a driver, a signal collector, a calibrator and a temperature sensor;
the mechanical packaging component comprises at least one of a housing, a base, a gasket, an optical/electrical interface, a damper, and an MEMS; and
the other optical component comprises at least one of a lens, a prism, a reflector, an isolator, an optical coating, an optical fiber connecting line and an interface.

15. The interferometric optical gyroscope system of claim 14, **characterized in that** the three optical gyroscope systems are placed in three directions for detecting angular speed information of the three directions, and the three optical gyroscope systems cooperate with three external acceleration sensors to form an inertial sensing system.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

splitting one beam of light waves into two beams of light waves in a TE mode; — S11

converting the two beams of light waves in the TE mode into one beam of light waves in the TE mode and one beam of light waves in a TM mode; — S12

transmitting the beam of light waves in the TE mode and the beam of light waves in the TM mode by means of helical waveguide modules; — S13

converting the beam of light waves in the TE mode and the beam of light waves in the TM mode into two beams of light waves in the TE mode and then combining the two beams into one beam of synthesized light waves; and — S14

S15

Calculate light intensity information detected by a photoelectric detection module and then convert the light intensity information into total phase information, so as to acquire rotation speed information, wherein, the total phase information $\Phi_{total}$ satisfies:

$$\Phi_{total} = \Phi_0 + \Phi_r = \left(n_{eff,\,TE} - n_{eff,\,TM}\right)\frac{2\pi L}{\lambda} + \frac{8\pi A}{c\lambda}\,\Omega \ .$$

FIG. 15

splitting one beam of light waves into two beams of light waves in a TE mode in each gyroscope;

S21

converting the two beams of light waves in the TE mode into one beam of light waves in the TE mode and one beam of light waves in a TM mode;

S22

transmitting the beam of light waves in the TE mode and the beam of light waves in the TM mode by means of helical waveguide modules of the two gyroscopes respectively, the light waves in the TE mode and the light waves in the TM mode having opposite directions in the helical waveguide modules of the two gyroscopes;

S23

converting the beam of light waves in the TE mode and the beam of light waves in the TM mode into two beams of light waves in the TE mode and then combining the two beams into one beam of synthesized light waves; and

S24

S25

Calculate first light intensity information detected by a photoelectric detection module of a first gyroscope and converting the first light intensity information into first total phase information;
Calculate second light intensity information detected by a photoelectric detection module of a second gyroscope and convert the second light intensity information into second total phase information;
Average the first total phase information and the second total phase information so as to acquire rotation speed information,

wherein, the first total phase information $\Phi_{total}$ satisfies:

$$\Phi_{total} = \Phi_0 + \Phi_r = \left(n_{eff,\ TE} - n_{eff,\ TM}\right)\frac{2\pi L}{\lambda} + \frac{8\pi A}{c\lambda}\ \Omega\ ;$$

the second total phase information $\Phi_{total}{}''$ satisfies:

$$\Phi_{total}{}'' = -\Phi_0 + \Phi_r = -\left(n_{eff,\ TE} - n_{eff,\ TM}\right)\frac{2\pi L}{\lambda} + \frac{8\pi A}{c\lambda}\ \Omega\ ;$$

$\Phi_r$ after averaging satisfies:

$$\frac{\left(\Phi_{total} + \Phi_{total}{}''\right)}{2} = \Phi_r = \frac{8\pi A}{c\lambda}\ \Omega\ .$$

FIG. 16

## Integrated interferometric optical gyroscope system

### Integrated interferometric optical gyroscope

### Other optical components

| Lens | Reflector, mirror |
|------|-------------------|
| Prism | Isolator |
| Optical fibers, connectors and interface | Optical coating |

### Peripheral circuit

Processor

Controller

Driver

Signal collector

Calibrator

Temperature sensor

### Mechanical packaging component

Case

Base

Carrier

Optical/electrical interface

Vibration absorber

MEMS

FIG. 17

FIG. 18

## INTERNATIONAL SEARCH REPORT

| International application No. |
|---|
| **PCT/CN2023/118488** |

**A.    CLASSIFICATION OF SUBJECT MATTER**

G01C19/64(2006.01)i

According to International Patent Classification (IPC) or to both national classification and IPC

**B.    FIELDS SEARCHED**

Minimum documentation searched (classification system followed by classification symbols)

IPC:G01C

Documentation searched other than minimum documentation to the extent that such documents are included in the fields searched

Electronic data base consulted during the international search (name of data base and, where practicable, search terms used)

CNTXT; ENTXTC; VEN; ENTXT; CNKI; IEEE: 陀螺仪, 赛丽科技, 张星宇, 偏振, 分束, 分离, 旋转, 横电, 横磁, 顺时针, 逆时针, 正转, 反转, 耦合, gyro, PBSR, polariz+, split, TE, TM, couple, clockwise, anticlockwise, counterclockwise

**C.    DOCUMENTS CONSIDERED TO BE RELEVANT**

| Category* | Citation of document, with indication, where appropriate, of the relevant passages | Relevant to claim No. |
|---|---|---|
| PX | CN 116558495 A (SAILI TECHNOLOGY (SUZHOU) CO., LTD.) 08 August 2023 (2023-08-08) <br> claims 1-15, and description, paragraphs [0005]-[0032] | 1-15 |
| A | CN 109099899 A (QXP TECHNOLOGIES INC.) 28 December 2018 (2018-12-28) <br> description, paragraphs [0037] and [0038], and figure 3 | 1-15 |
| A | CN 101660910 A (PEKING UNIVERSITY) 03 March 2010 (2010-03-03) <br> entire document | 1-15 |
| A | CN 115560741 A (BEIHANG UNIVERSITY) 03 January 2023 (2023-01-03) <br> entire document | 1-15 |
| A | US 2020158506 A1 (IMEC VZW) 21 May 2020 (2020-05-21) <br> entire document | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 November 2023** | **24 November 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/118488**

| Patent document cited in search report | | | Publication date (day/month/year) | Patent family member(s) | | | Publication date (day/month/year) |
|---|---|---|---|---|---|---|---|
| CN | 116558495 | A | 08 August 2023 | None | | | |
| CN | 109099899 | A | 28 December 2018 | None | | | |
| CN | 101660910 | A | 03 March 2010 | CN | 101660910 | B | 27 July 2011 |
| CN | 115560741 | A | 03 January 2023 | None | | | |
| US | 2020158506 | A1 | 21 May 2020 | US | 10921125 | B2 | 16 February 2021 |

Form PCT/ISA/210 (patent family annex) (July 2022)